Europäisches Patentamt

European Patent Office

Office européen des brevets

(11) Veröffentlichungsnummer: **0 095 024**
A2

# (12) EUROPÄISCHE PATENTANMELDUNG

(21) Anmeldenummer: **83102624.0**

(22) Anmeldetag: **17.03.83**

(51) Int. Cl.³: **B 62 K 19/18**

(30) Priorität: **21.05.82 DE 3219180**

(43) Veröffentlichungstag der Anmeldung:
**30.11.83 Patentblatt 83/48**

(84) Benannte Vertragsstaaten:
**AT BE CH DE FR GB IT LI LU NL SE**

(71) Anmelder: **Klose, Odo, Prof.**
**Am Freudenberg 19**
**D-5600 Wuppertal 1(DE)**

(72) Erfinder: **Klose, Odo, Prof.**
**Am Freudenberg 19**
**D-5600 Wuppertal 1(DE)**

(74) Vertreter: **Rieder, Hans-Joachim, Dr. et al,**
**Corneliusstrasse 45**
**D-5600 Wuppertal 11(DE)**

(54) Fahrrad.

(57) Die Erfindung betrifft ein Fahrrad mit einem aus zwei seitlich nebeneinander verlaufenden Rohren (1,2) gebildeten Doppelrahmen (3), welcher je ein schellenartig befestigtes Lager für die Sattelstange (20) und die Pedalachse (22) und ein Lagerrohr (16) für die Lenkgabel trägt, und schlägt zur Erzielung einer einfachen, montagevorteilhaften sowie stabilen Zuordnung der drei Lager vor, daß auch das Lagerrohr (16) für die Lenkgabelachse (17) schellenartig gestaltet und befestigt ist und daß alle drei Lager (18, 21 und Lagerrohr 16) im Bereich von in Vertiefungen (24) der Schellenhälften (a,b) einliegenden Querverbindungsstreben (4) der Rohre (1,2) und im Bereich von Eckverbindungen (I,II,III/IV) derselben angeordnet sind.

FIG. 1

./...

FIG. 3

1

Fahrrad

Die Erfindung bezieht sich auf ein Fahrrad mit einem aus zwei seitlich nebeneinander verlaufenden Rohren gebildeten Doppelrahmen, welcher je ein schellenartig befestigtes Lager für die Sattelstange und die Pedalachse und ein Lagerrohr für die Lenkgabel trägt.

Ein Fahrrad dieser Art ist durch die FR-PS 909 163 bekannt. Gemäß einer Varianten dieses Vorläufers erfolgt die Festlegung des Lagerrohres für die Lenkgabel auf schweißtechnischem Wege. Ein anderer Vorschlag, der bezüglich des Doppelrahmens auf Bugholz hinweist, soll die Festlegung über Pflöcke oder Dübel geschehen. Die schellenartig befestigten Lager für die Sattelstange und die Pedalachse sind ver- und feststellbar am Doppelrahmen gehalten. Diese theoretischen Vorschläge haben nach diesseitigem Wissen keinen Eingang in die Praxis gefunden, dies offenbar aufgrund mangelnder Gesamtstabilität eines solchen Doppelrahmens. Es blieb daher im wesentlichen beim klassischen Rahmenbau. Hier werden die rahmenbildenden Einzelschenkel schweißtechnisch zusammengefügt, meist unter Verwendung von die.Knotenpunktstellen verstärkenden Muffen.

Aufgabe der Erfindung ist es, unter Nutzung der vorteilhaften Bauweise des mittelstützenfreien Doppelrahmens eine einfache, montagevorteilhafte sowie stabile Zuordnung der drei Lager zu erreichen.

Gelöst ist diese Aufgabe durch die im Anspruch 1 angegebene Erfindung.

VNR: 107212   ANR: 1280694   Dr.R./P./G.   17 744/745   16.4.1982

Die Unteransprüche sind vorteilhafte Weiterbildungen des erfindungsgemäßen Fahrrades.

Zufolge solcher Ausgestaltung ist ein montagegünstiger Fahrradaufbau
hoher Gebrauchsstabilität realisiert: Es wird nach wie vor von zwei
annähernd in die Umrißform üblicher Rahmen gebogenen, endverbundenen, relativ querschnittskleinen Rohrabschnitten ausgegangen.
Diese kongruent gestalteten Teile stehen über Querverbindungsstreben
in so festem Verbund, daß neben den beiden schellenartig befestigten
Lagern für die Sattelstange und die Pedalachse nun auch das Lagerrohr für die Lenkgabelachse schellenartig zugeordnet werden kann.
Die Stabilität des Doppelrahmens braucht nicht mehr über die schweißtechnische Zuordnung des Lagerrohrs für die Lenkgabelachse gewonnen
zu werden. Dieses Rohr wurde gabelkopfseitig zwischen den doppelrahmenbildenden Rohren eingeschweißt. Neben der schellenartigen
Zuordnung sämtlicher drei Lager ist darüber hinaus weiter so vorgegangen, daß diese Lager im Bereich der Querverbindungsstreben der
Rohre sitzen. Die Schellenhälften weisen formentsprechende Vertiefungen auf. Hierdurch wird nicht nur ein schellenartiger Umgriff in
der Rahmenebene, sondern auch quer zu dieser realisiert. Dies führt
zu einer verschiebefesten, exakten Positionierung der drei Lager. Zur
Sicherung gegen Lageveränderung ist aber auch noch der Doppelrahmen selbst herangezogen, indem die Querverbindungsstreben im
Bereich von Eckabbiegungen der Rohre angeordnet sind. Durch die
bauliche Maßnahme, daß der Querschnitt der Querverbindungsstege
kleiner ist als derjenige der Rohre, geht nur wenig Umgrifffläche der
Rohreinlagerungsmulden verloren; vielmehr setzt sich der Muldengrund
unterbrechungsfrei als tragende Fläche fort. Dadurch, daß dabei auch
die die Materialbrücke zwischen den Rohren darstellenden Querverbindungsstege radial zum Rohr angeordnet sind, liegen sie in kürzestem Abstand; dies ist materialsparend. Die Zuordnungsfestigkeit
der Schellenhälften ist optimiert, wenn in jedem Eckabbiegungsbereich
zwei Querverbindungsstege angeordnet sind. Selbst bei materialfehlerbedingtem Bruch wird die Verbindung der doppelrahmenbildenden

VNR: 107212    ANR: 1280694    Dr.R./P./G.    17 744/745    16.4.1982

Rohre aufrechterhalten aufgrund einer gewissen gegenseitigen Stabilisierung. Um trotz etwaiger Querschnittsabweichungen der Rohre im Bereich der Eckabbiegungen die funktionsgerechte Schellenzuordnung sicherzustellen, ist die Innenfläche der Rohreinlagerungsmulden der Schellenhälften mit in Querrichtung verlaufenden Auflagerippen ausgestattet. Dies führt zu einer gewissen Anpassung an etwaige Querschnittsabweichungen. Neben der Lagerausbildung für die Sattelstange können die diesbezüglichen Schellenhälften aber auch noch so ausgestaltet sein, daß sie eine Sattelstangen-Höhen-Verstell-Rastvorrichtung aufnehmen. Konkret ist hier baulich so vorgegangen, daß die eine sich über zwei gegensinnige Eckabbiegungen mit dazwischenliegendem geraden Verbindungsabschnitt erstreckende Schellenhälfte, die zum Lager für die Sattelstange gehört, zur Aufnahme der Rastvorrichtung so ausgebildet ist, daß in einem nach oben offenen, parallel zum Verbindungsabschnitt liegenden Schacht ein abgefederter Schieber als Sperrglied für eine an der Sattelstange angreifende Rastkugel läuft. Die Eingriffstellen sind als Dellen in der Mantelwand der Sattelstange realisierbar. Um radialem Versatz zwischen Rastkugel und diesen Dellen entgegenzuwirken, wird weiter so vorgegangen, daß der in der einen Schellenhälfte vorgesehene Hohlraum für die Sattelstange elliptisch gestaltet ist. Die Sattelstange weist entsprechenden Querschnitt auf. Statt eines elliptischen Querschnitts kann auch ein solcher flach/runder Art angewandt sein. Um innerhalb der Schellenhälfte den erforderlichen Freiraum für die Sattelstange zu schaffen, ist der obere der beiden Querverbindungsstege dieser Eckabbiegung aus der Erstreckungsrichtung der Sattelstange seitenversetzt. Bezüglich der Sattelstangen-Höhen-Verstell-Rastvorrichtung ist es weiter von Vorteil, daß eine die Rastkugel haltende Gleitwand des Schachtes von einer Nase der gegenüberliegenden Schellenhälfte gehalten ist. Eine vorteilhafte Weiterbildung bezüglich des Pedalachsen-Lagers besteht schließlich darin, daß die diesbezüglichen Schellenhälften eine der einen Querverbindungsstrebe benachbarte Aufnahme für einen Radständer-Befestigungsbolzen ausbilden.

VNR: 107212   ANR: 1280694   Dr.R./P./G.   17 744/745   16.4.1982

4

Weitere Vorteile und Einzelheiten des Gegenstandes der Erfindung sind nachstehend anhand eines zeichnerisch veranschaulichten Ausführungsbeispieles näher erläutert. Es zeigt:

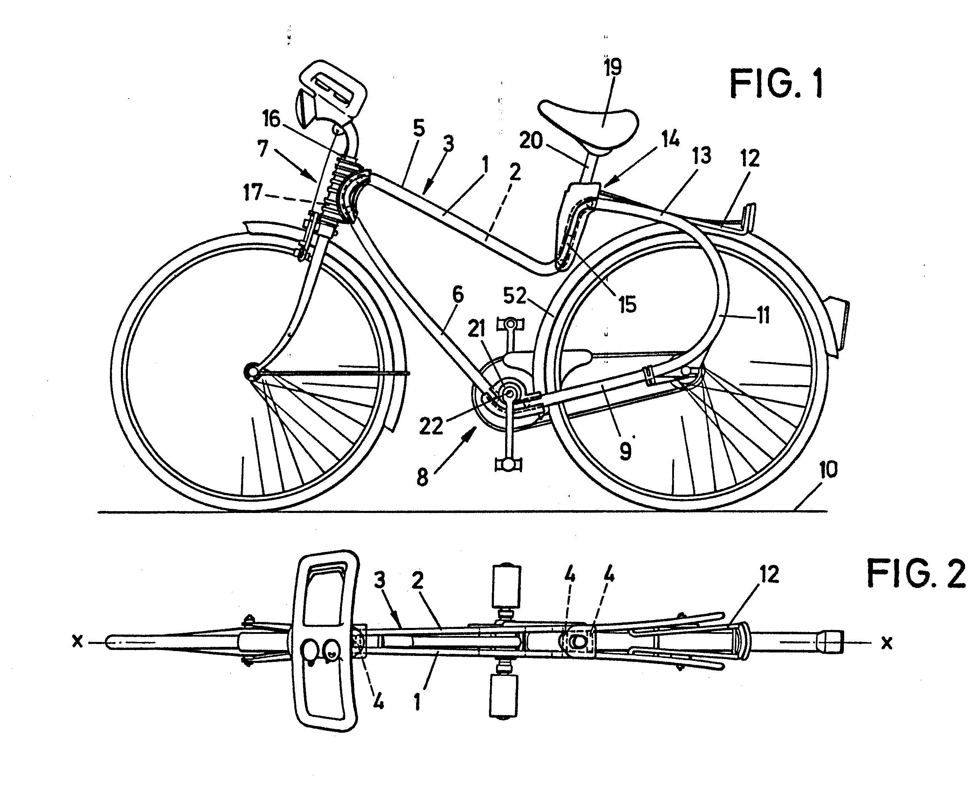

Fig. 1   das erfindungsgemäß ausgebildete Fahrrad in Seitenansicht,

Fig. 2   die Draufsicht hierzu,

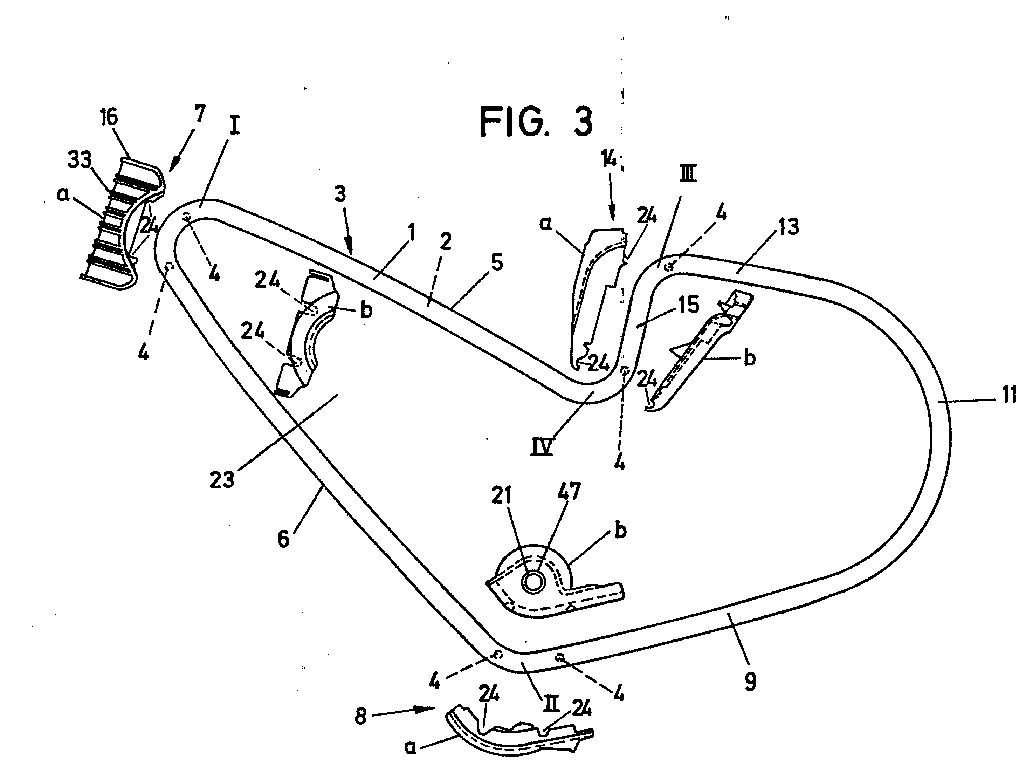

Fig. 3   den Fahrradrahmen in Einzeldarstellung unter Verdeutlichung der an den Eckabbiegungen des Rahmens anzubringenden, jedoch noch nicht geschlossenen Schellenhälften,

Fig. 4   die das Lagerrohr für die Lenkgabelachse aufnehmenden Schellenhälften in verbundenem Zustand, teilweise geschnitten,

Fig. 5   die Ansicht in Richtung des Pfeiles V,

Fig. 6   die Draufsicht auf Fig. 4,

Fig. 7   den Schnitt gemäß Linie VII-VII bzw. VII'-VII' in Fig. 4,

Fig. 8   die das Lager für die Sattelstange ausbildenden Schellenhälften in geschlossenem Zustand, und zwar im vertikalen Längsschnitt unter ebenenversetzter Schnittführung,

Fig. 9   die Draufsicht auf Fig. 8, teilweise aufgebrochen,

Fig. 10  einen in zwei verschiedenen Ebenen geführten Querschnitt durch Fig. 8,

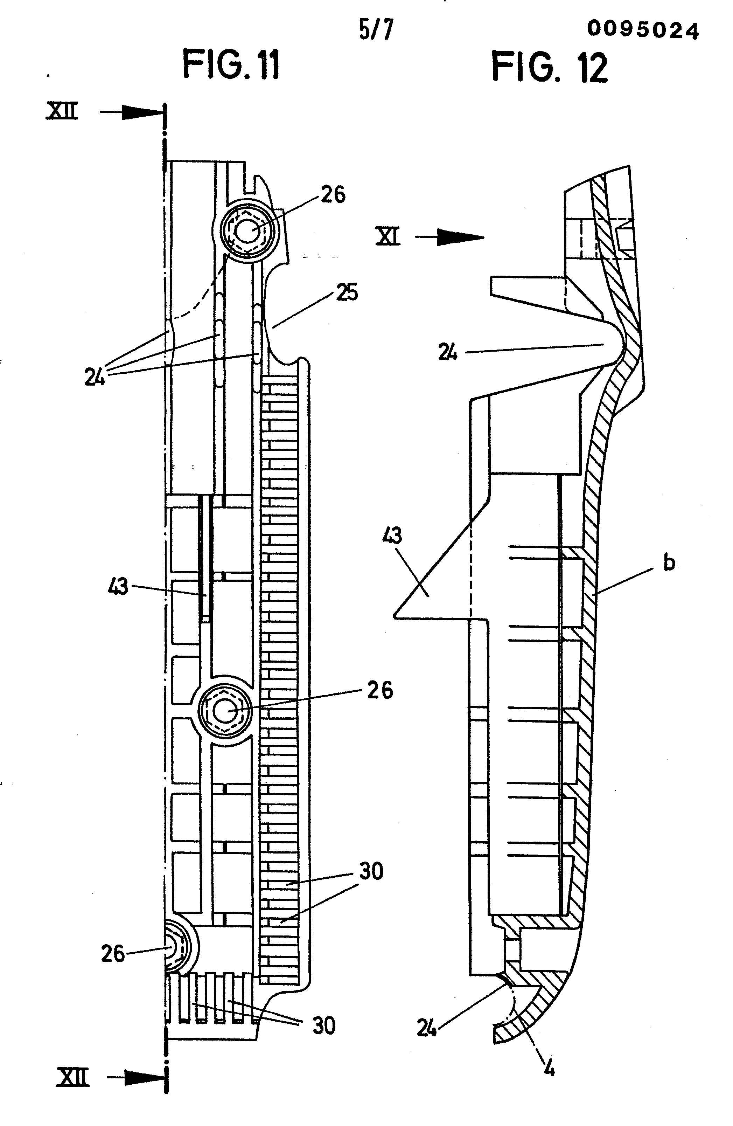

Fig. 11  eine Teil-Ansicht der einen Schellenhälfte des Lagers für die Sattelstange,

VNR: 107212   ANR: 1280694   Dr.R./P./G.   17 744/745   16.4.1982

5

Fig. 12    den Schnitt gemäß Linie XIII-XIII in Fig. 11,

Fig. 13    die das Lager für die Pedalachse bildenden Schellenhälften im
           Vertikalschnitt (Schnitt gemäß Linie XIII-XIII in Fig. 15),

Fig. 14    die eine Seitenansicht hierzu,

Fig. 15    die andere Seitenansicht der zusammengefügten Schellenhälften, teilweise aufgebrochen,

Fig. 16    den Schnitt gemäß Linie XVI-XVI in Fig. 15,

Fig. 17    die Draufsicht auf die untere Schellenhälfte in halbseitiger
           Darstellung und

Fig. 18    den Teilschnitt gemäß Linie XVIII-XVIII in Fig. 13.


Das dargestellte Fahrrad besitzt einen aus zwei seitlich nebeneinander
verlaufenden Rohren 1 und 2 gebildeten Doppelrahmen 3. Die kongruenten Einzelrahmen werden von Querverbindungsstegen 4 zusammengehalten.


Bezüglich der Querverbindungsstege ist auf Rohr runden Querschnitts
zurückgegriffen. Diese Rohrabschnitte sind mit ihren
Stirnenden an den einander zugewandten Innenflächen der Rohre 1, 2
angeschweißt. Der Querschnitt der Querverbindungsstege 4 ist kleiner
als der größte Durchmesser der elliptischen Querschnitt aufweisenden
Rohre 1 und 2.


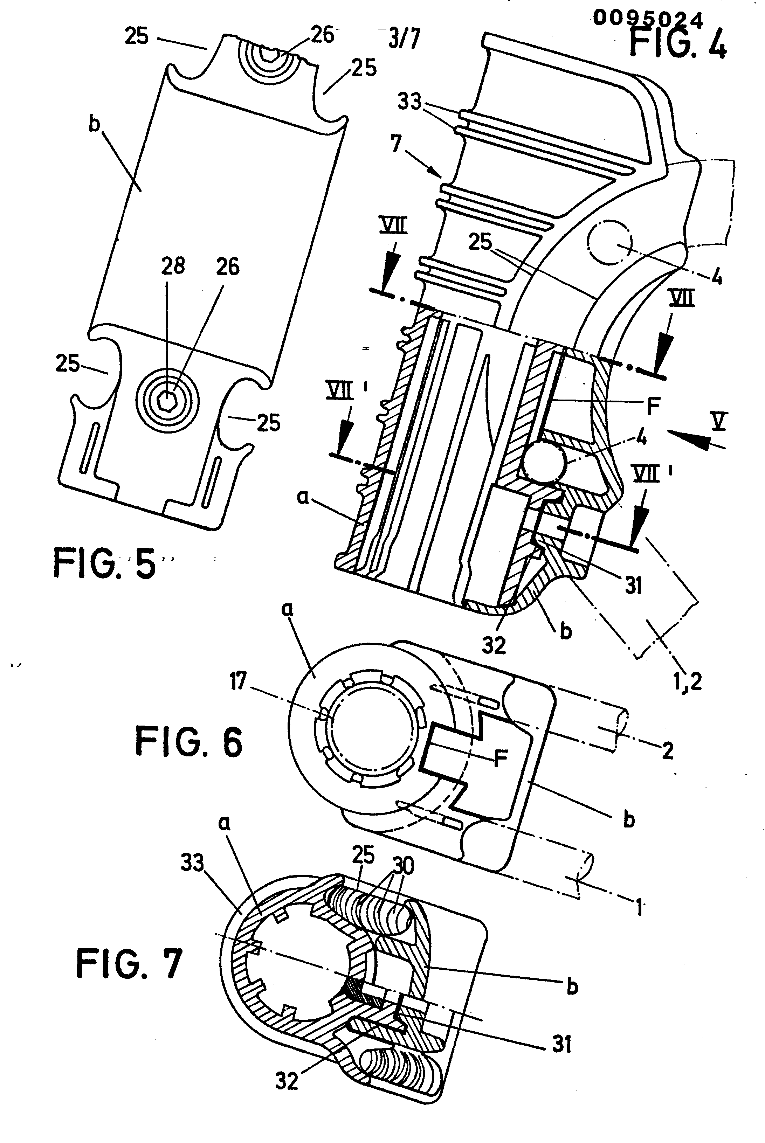

Außerdem erfolgt die Zuordnung der Querverbindungsstege 4 derart,
daß sie radial zur Mitte der Rohre 1 und 2 weisen (vergl. Fig. 4).


VNR: 107212    ANR: 1280694    Dr.R./P./G.    17 744/745    16.4.1982

6

Der völlig mittelstützenfrei gehaltene Doppelrahmen 3 bildet in Fahrtrichtung gesehen zwei schwach konvex gewölbte Rahmenschenkel 5 und 6 aus. Im Bereich des Gabelkopfes 7 bilden diese Schenkel eine eng gerundete Eckabbiegung I.

Im Bereich des untenliegenden Tretlagers 8 geht der schräg abfallende untere Rahmenschenkel 6 über eine ebenfalls stark gerundete Eckumbiegung II in einen schwach ansteigenden Rahmenschenkel 9 über. Dieser ist zur horizontalen Standfläche 10 des Fahrrades hin schwach konvex gewölbt, um dann anschließend in einen Bogenabschnitt 11 überzugehen, der im Bereich des Gepäckträgers 12 wiederum in einen nur schwach gewölbten, leicht ansteigenden Rahmenschenkel 13 ausläuft.

Letzterer reicht bis in den Bereich einer Sattelhalterung 14. An den Rahmenschenkel 13 schließt eine wiederum eng gewölbte Eckabbiegung III an. Diese geht in einen kurzen Verbindungsabschnitt 15 über. Letzterer weist in Richtung der tiefstliegenden Eckabbiegung II, also in Richtung des Tretlagers 8. Etwa im oberen Rahmendrittel wendet sich der Verbindungsabschnitt 15 über eine weitere enge Eckabbiegung IV in Richtung des Gabelkopfes 7. Diese Eckabbiegung IV geht in den abfallend ausgerichteten oberen Rahmenschenkel 5 über.

Die Verbindungsstelle des aus einem Stück gebogenen Einzelrahmens liegt vorzugsweise in der Zone des Verbindungsabschnitts 15. Sie kann als Stumpfschweißstelle oder aber auch als lösbare Befestigung realisiert sein. Ebenso besteht die Möglichkeit, die Querverbindungsstreben 4 in Art einer Verschraubung zu realisieren, wobei die Röhrchenabschnitte dann als Distanzstücke fungieren.

Die quer zur Rahmen-Längsmittelebene x-x ausgerichteten Querverbindungsstreben 4 befinden sich im Bereich der Eckabbiegungen I, II sowie der sich gegenüberliegenden Eckabbiegungen III/IV der Sattelhalterung 14. Sie sind jeweils paarig und in einem möglichst weiten

VNR: 107212   ANR: 1280694   Dr.R./P./G.   17 744/745   16.4.1982

Abstand zueinander angeordnet.

Sowohl das Lagerrohr 16 für die Lenkgabelachse 17 als auch das Lager 18 für eine den Sattel 19 tragende Sattelstange 20 und das Lager 21 für die Pedalachse 22 sind an dem Doppelrahmen 3 schellenartig gehaltert. Die rahmenaußenseitig die Rohre 1, 2 übergreifenden Schalenhälften sind mit a und die vom Rahmeninneren 23 her zugeführten Schalenhälften mit b bezeichnet. Beide Schalenhälften a und b bilden die Querverbindungsstreben 4 anteilig umfassende Vertiefungen 24 aus. Diese im Verein mit den die Rohre 1 und 2 übergreifenden Einlagerungsmulden 25 schaffen nach Festziehen von die Schellenhälften miteinander verbindenden Befestigungselementen 26 einen festen Sitz dieser spannbackenartigen, die Funktionsteile lagernden bzw. haltenden Funktionsteile.

Bezüglich der Befestigungselemente handelt es sich um Schrauben mit selbstsichernden Muttern 27. Der Kopf der Schraubbolzen weist eine Angriffsfläche in Form eines Innensechskants 28 auf. Die Befestigungselemente liegen möglichst in Nähe der Querverbindungsstreben 4. Je nach den räumlichen Gegebenenheiten können beiderseits der Vertiefungen solche Befestigungselemente vorgesehen sein.

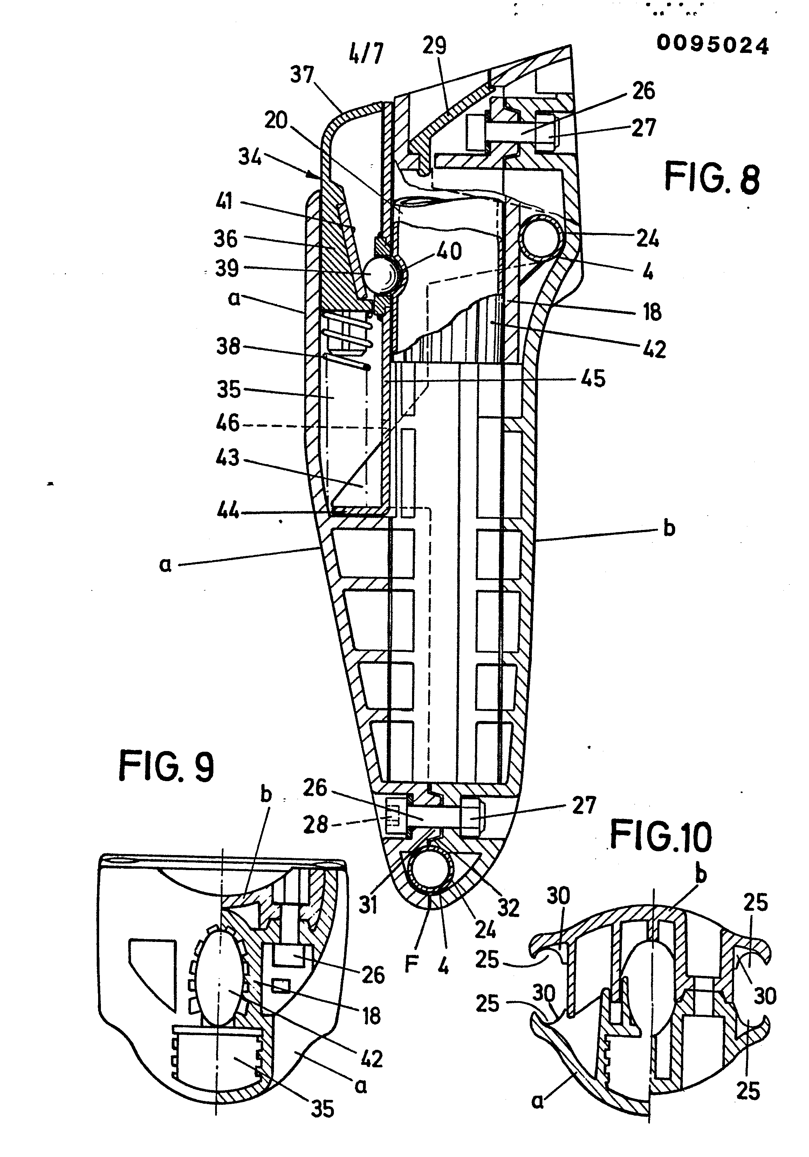

Andererseits besteht aber auch die Möglichkeit, die Mutter 27 oder den Schraubbolzen in der einen oder anderen Schellenhälfte a, b mit einzuspritzen. Die Schraubenschächte können durch formangepaßte Deckel 29 verschlossen sein (vergl. Fig. 8). Die Innenfläche der Rohreinlagerungsmulden 25 der Schellenhälften a, b sind mit in Querrichtung verlaufenden Auflagerippen 30 ausgestattet. Hierdurch werden Unebenheiten und gewisse Formabweichungen, die beim Biegen des Rahmens durchaus auftreten können, kompensiert. Der Rippenabstand ist beim Ausführungsbeispiel in enger Folge wiedergegeben. Natürlich können auch weitere Abstände gewählt werden. Hinsichtlich der Ausrichtung der Auflagerippen 30 ist auf das Erfordernis der Ent-

0095024

8

formbarkeit geachtet. Die Rippenstruktur ist auch im Hinblick auf die stets anzustrebenden Materialersparnisse von Interesse. So ist eine Rippenstruktur auch bezüglich anderer Bereiche der Schellenhälften a, b angewandt, seien sie tragender oder führender Art.

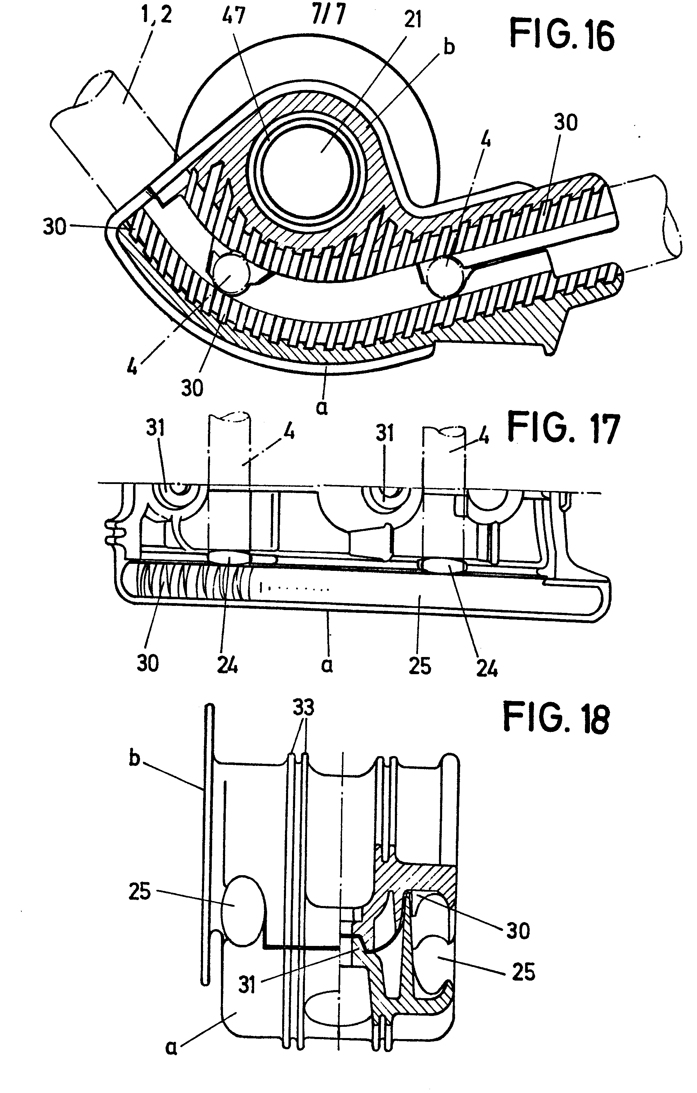

Fig. 16 zeigt als Ausführungsbeispiel Auflagerippen 30 auch für die Querverbindungsstreben 4.

Im übrigen ist hinsichtlich der Teilungsfuge F auf eine konturenreiche Durchdringung geachtet; vor allem im Bereich der Befestigungselemente 26 tritt die eine Schellenhälfte mit einem Vorsprung 31 formpassend in eine konturenentsprechende Aussparung 32 der anderen Schellenhälfte ein. Wie bspw. aus Fig. 10 hervorgeht, ist der Ineinandergriff auch in der Querebene der backenartigen Schellenhälften realisiert.

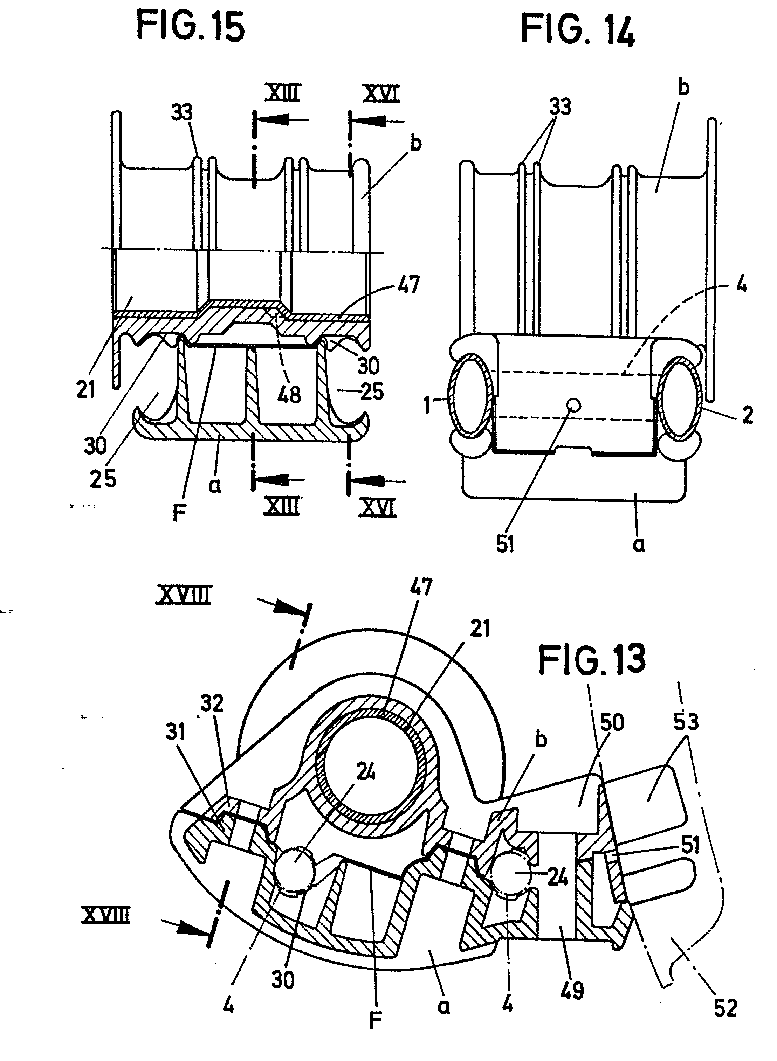

Außenseitig sind die Schellenhälften, wo dies sinnvoll und aus stabilisatorischen Gründen günstig ist, mit reifartigen, angeformten Stabilisierungsrippen 33 versehen, (vergl. Fig. 4 und 15).

Das die Sattelstange 20 aufnehmende Schellenhälftenpaar ist zugleich Träger einer Sattelstangen-Höhen-Verstell-Rastvorrichtung 34. Die eine Schellenhälfte a der sich über die beiden gegensinnigen Abbiegungen III und IV erstreckenden Schellenhälften a, b weist dazu einen nach oben hin offenen, sich parallel zum Verbindungsabschnitt 15 erstreckenden Schacht 35 auf. In letzterem führt sich ein in Richtung der Sperrstellung abgefederter Schieber 36. Sein oberer, aus dem Schaft freistehender Abschnitt bildet eine drucktastenartige Betätigungshandhabe 37. Eine den Schieber 36 belastende Schraubengangdruckfeder 38 stützt sich auf dem Schachtboden ab.

Der Schieber belastet eine Rastkugel 39. Letztere wirkt mit in vertikaler Richtung in engen Abständen angeordneten Rastvertiefungen 40 der Sattelstange 20 zusammen. Durch Abwärtsdrücken des Schiebers

VNR: 107212   ANR: 1280694   Dr.R./P./G.   17 744/745   16.4.1982

36 entfernt sich die keilförmige, die Rastkugel 39 belastende Steuerfläche 41 von dem wirksamen Stützbereich der Rastkugel. Durch einhergehendes Ziehen an der Sattelstange 20 wird die Rastkugel 39 ausgesteuert. In der gewünschten Einstellhöhe wird durch Freigabe des Schiebers die nächste Raststellung fixiert.

Der die Sattelstange 20 aufnehmende, in der einen Schellenhälfte a berücksichtigte Hohlraum 42 ist elliptischen Querschnitts. Hierdurch ist vermieden, daß sich die Sattelstange 20 um ihre Längsmittelachse dreht. Folglich bleiben die vorzugsweise in dem engeren Ellipsenbogen des Rohrquerschnitts angeordneten Rastvertiefungen 40 in funktionsgerechter Ausrichtung. Um genügend Raum für die Sattelstange 20 zu erhalten, ist der obere der beiden Querverbindungsstege 4, also der im Bereich der Eckabbiegung III aus der Erstreckungsrichtung der Sattelstange nach rückwärts seitenversetzt.

Während sämtliche Schellenhälften aus Kunststoff bestehen, ist bezüglich der die Rastvorrichtung bildenden Mittel weitestgehend auf Metallteile zurückgegriffen. Um dabei eine Fixierung dieser Vorrichtung ohne den Einsatz der klassischen Befestigungselemente wie Schrauben oder dergleichen zu bewerkstelligen, übergreift eine der Schellenhälfte b angeformte Nase 43 eine sich auf dem Boden des Schachtes 35 abstützende, das dortige Federwiderlager bildende Abwinklung 44 der Gleitwand 45 der Rastvorrichtung 34. Diese Gleitwand 45 trägt in einem Fenster die Rastkugel 39. Der Fensterbereich ist durch einen eingeschweißten Ring verstärkt. Die paarig vorgesehene Nase 43 durchgreift ein Fenster 46 der Gleitwand 45.

Der Schellenhälfte ist die das Lager 21 bildende Büchse 47 eingeformt. Sie erstreckt sich räumlich in der Innenkehle der Eckabbiegung II. Zur Drehsicherung der umspritzten Büchse 47 weist diese einen Vorsprung 48 auf.

VNR: 107212    ANR: 1280694    Dr.R./P./G.    17 744/745    16.4.1982

10

Über die eigentliche Tretlageraufnahme hinausgehend, erfüllt dieses Schellenpaar noch eine weitere Funktion dahingehend, daß es der rückwärtigen Querverbindungsstrebe 4 benachbart eine Aufnahme für einen nicht näher dargestellten Radständer-Befestigungsbolzen formt. Die Aufnahme ist als im wesentlichen vertikal ausgerichtete Bohrung 49 realisiert. Die Bohrung 49 geht in eine verbreiterte Ausnehmung 50 über, welche die Befestigungsschraube für den Bolzen aufnimmt.

Weiter weist die obere Schellenhälfte b dieses Schellenpaares noch eine etwa horizontale Bohrung 51 auf. Diese dient zum Einschrauben der das Schutzblech (52) haltenden Befestigungsschraube (nicht näher dargestellt). Der Endbereich der genannten und der anderen Schellenhälfte bildet eine der Schutzblechquer- wie -längswölbung entsprechende Ausnehmung 53 aus.

Alle in der Beschreibung erwähnten und in der Zeichnung dargestellten neuen Merkmale sind erfindungswesentlich, auch soweit sie in den Ansprüchen nicht ausdrücklich beansprucht sind.

VNR: 107212   ANR: 1280694   Dr.R./P./G.   17 744/745   16.4.1982

Patentansprüche

1. Fahrrad mit einem aus zwei seitlich nebeneinander verlaufenden Rohren gebildeten Doppelrahmen, welcher je ein schellenartig befestigtes Lager für die Sattelstange und die Pedalachse und ein Lagerrohr für die Lenkgabel trägt, dadurch gekennzeichnet, daß auch das Lagerrohr (16) für die Lenkgabelachse (17) schellenartig gestaltet und befestigt ist und daß alle drei Lager (18, 21 und Lagerrohr 16) im Bereich von in Vertiefungen (24) der Schellenhälften (a, b) einliegenden Querverbindungsstreben (4) der Rohre (1, 2) und im Bereich von Eckverbindungen (I, II, III/IV) derselben angeordnet sind.

2. Fahrrad nach Anspruch 1, dadurch gekennzeichnet, daß der Querschnitt der Querverbindungsstege (4) kleiner ist als derjenige der Rohre (1, 2) und die Querverbindungsstege (4) radial zum Rohr (1 bzw. 2) angeordnet sind.

3. Fahrrad nach Anspruch 2, dadurch gekennzeichnet, daß im Bereich jeder Eckabbiegung (I, II, III/IV) zwei Querverbindungsstege (4) angeordnet sind.

4. Fahrrad nach Anspruch 1, dadurch gekennzeichnet, daß die tragende Innenfläche der Rohreinlagerungsmulden (25) der Schellenhälften (a, b) mit in Querrichtung verlaufenden Auflagerippen (30) ausgestattet sind.

5. Fahrrad nach Anspruch 1, dadurch gekennzeichnet, daß die eine (a) der beiden sich über zwei gegensinnige Eckabbiegungen (III, IV) mit dazwischenliegendem geraden Verbindungsabschnitt (15) erstreckenden Schellenhälften (a, b), die zum Lager (18) für die Sattelstange (20) gehört, eine Sattelstangen-Höhen-Verstell- und Rastvorrichtung (34) trägt derart, daß in einem nach oben offenen,

VNR: 107212   ANR: 1280694   Dr.R./P./G.   17 744/745   16.4.1982

parallel zum Verbindungsabschnitt (15) liegenden Schacht (35) ein abgefederter Schieber (36) als Sperrglied für eine an der Sattelstange (20) angreifende Rastkugel (39) läuft.

6. Fahrrad nach Anspruch 5, dadurch gekennzeichnet, daß der in der einen Schellenhälfte (a) vorgesehene Hohlraum (42) für die Sattelstange (20) elliptisch gestaltet ist und der obere der beiden Querverbindungsstege (4) dieser Eckabbiegung (4) auf der Erstreckungsrichtung der Sattelstange (20) seitenversetzt ist.

7. Fahrrad nach Anspruch 5, dadurch gekennzeichnet, daß eine die Rastkugel (39) haltende Gleitwand (45) des Schachtes (35) von einer Nase (43) der gegenüberliegenden Schellenhälfte (b) gehalten ist.

8. Fahrrad nach Anspruch 1, dadurch gekennzeichnet, daß die Schellenhälften (a, b) des Pedalenachsen-Lagers (21) eine der einen Querverbindungsstrebe (4) benachbarte Aufnahme für einen Radständer-Befestigungsbolzen und eine formangepaßte Ausnehmung (53) zur Befestigung des Schutzbleches (52) ausbilden.

VNR: 107212   ANR: 1280694   Dr.R./P./G.   17 744/745   16.4.1982

FIG.1

FIG.2

0095024

FIG. 3

**FIG. 4**

3/7

**FIG. 5**

**FIG. 6**

**FIG. 7**

4/7

0095024

FIG. 8

FIG. 9

FIG.10

FIG. 11

FIG. 12

0095024

FIG.15

FIG.14

FIG.13

0095024

FIG.16

FIG. 17

FIG. 18